# EUROPEAN PATENT APPLICATION

(11) **EP 4 672 491 A2**
(43) Date of publication of application: **31.12.2025**
(21) Application number: 25179109.1
(22) Date of filing: 27.05.2025
(51) Int. Cl.: H01M 50/636

(54) **POWER STORAGE DEVICE**

(30) Priority: 24.06.2024 JP 2024101519
(71) Applicant: Prime Planet Energy & Solutions, Inc., Chuo-ku, Tokyo 103-0022 (JP)
(72) Inventor: MARUBAYASHI, Hironori, Tokyo, 103-0022 (JP)
(74) Representative: Kuhnen & Wacker Patent- und Rechtsanwaltsbüro PartG mbB

(57) **Abstract**

A power storage device includes a case body, an electrode body, an electrolyte, a positive electrode terminal, a negative electrode terminal, a positive electrode sealing plate, and a negative electrode sealing plate. The case body has two opposed surfaces that are open. The positive electrode sealing plate has a positive electrode attachment hole to which the positive electrode terminal is attached. The positive electrode sealing plate closes one of the two opposed surfaces. The negative electrode sealing plate has a negative electrode attachment hole to which the negative electrode terminal is attached. The negative electrode sealing plate closes another of the two opposed surfaces. The positive electrode sealing plate has a first through hole through which the electrolyte is allowed to be injected. The negative electrode sealing plate has a second through hole through which the electrolyte is allowed to be injected.

## Description

### BACKGROUND

The present disclosure relates to a power storage device.

Japanese Patent Application Publication No. 2019-57421 discloses a secondary battery including an exterior case, an electrode body, and an upper surface member. The electrode body is housed in the exterior case. The upper surface member is located on an upper portion of the exterior case. The upper surface member includes a liquid inlet and a lid. The lid closes the liquid inlet. The upper surface member includes a recess. The bottom surface of the recess includes the liquid inlet. The lid is movable between a first position that closes the liquid inlet and a second position located away from the liquid inlet. The first position slopes to be lower than the second position.

### SUMMARY

The inventor of the present disclosure aims to enhance productivity of a power storage device including a case body whose two opposed surfaces are open.

The power storage device disclosed here includes a case body, an electrode body, an electrolyte, a positive electrode terminal, a negative electrode terminal, a positive electrode sealing plate, and a negative electrode sealing plate. The case body has two opposed surfaces that are open. The electrode body is housed in the case body. The electrolyte is housed in the case body. The positive electrode terminal is connected to the electrode body. The negative electrode terminal is connected to the electrode body. The positive electrode sealing plate has a positive electrode attachment hole to which the positive electrode terminal is attached. The positive electrode sealing plate closes one of the two opposed surfaces. The negative electrode sealing plate has a negative electrode attachment hole to which the negative electrode terminal is attached. The negative electrode sealing plate seals another of the two opposed surfaces. The positive electrode sealing plate has a first through hole through which the electrolyte is allowed to be injected. The negative electrode sealing plate has a second through hole through which the electrolyte is allowed to be injected.

This power storage device has enhanced productivity.

### BRIEF DESCRIPTION OF THE DRAWINGS

FIG. 1 is a perspective view of a power storage device 100.
FIG. 2 is a perspective view of the power storage device 100.
FIG. 3 is a schematic view of the power storage device 100.
FIG. 4 is a schematic view of an electrode body 20.
FIG. 5 is a schematic view illustrating the state of injecting an electrolyte 50 into a case 10.
FIG. 6 is a cross-sectional view of a positive electrode sealing plate 30 of a power storage device 100A.
FIG. 7 is a cross-sectional view of a negative electrode sealing plate 40 of the power storage device 100A.
FIG. 8 is a schematic view illustrating the procedure of integrally resin molding a second sealing member 62 with the negative electrode sealing plate 40 and a negative electrode terminal 45.
FIG. 9 is a schematic view illustrating the procedure of integrally resin molding the second sealing member 62 with the negative electrode sealing plate 40 and the negative electrode terminal 45.
FIG. 10 is a schematic view illustrating a second sealing member 62 according to another embodiment.
FIG. 11 is a schematic view illustrating a second sealing member 62 according to another embodiment.
FIG. 12 is a schematic view illustrating a second sealing member 62 according to another embodiment.
FIG. 13 is a schematic view illustrating the state of injecting an electrolyte 50 into a case 10.
FIG. 14 is a schematic view of a power storage device 100B.

### DETAILED DESCRIPTION

An embodiment of the technique disclosed here will be described hereinafter with reference to the drawings. The embodiment described herein is, of course, not intended to particularly limit the present disclosure. Each drawing is a schematic view and does not necessarily reflect an actual product. Members and parts having the same functions are denoted by the same reference numerals as appropriate, and description for the same members and parts will not be repeated as appropriate. In the following description, characters L, R, F, Rr, U, and D in the drawings represent left, right, front, rear, up, and down, respectively, and characters X, Y, and Z in the drawings represent the short-side direction, the long-side direction, and the height direction of a power storage device. It should be noted that these directions are defined merely for convenience of description, and do not limit the state of installation of the power storage device.

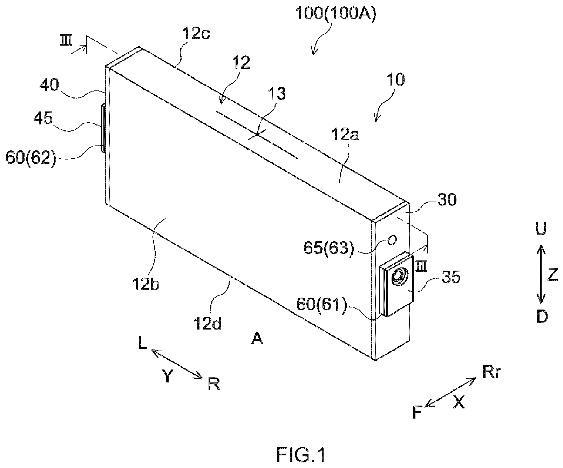

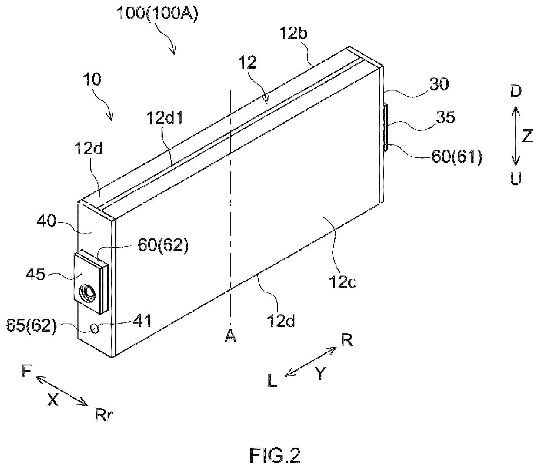

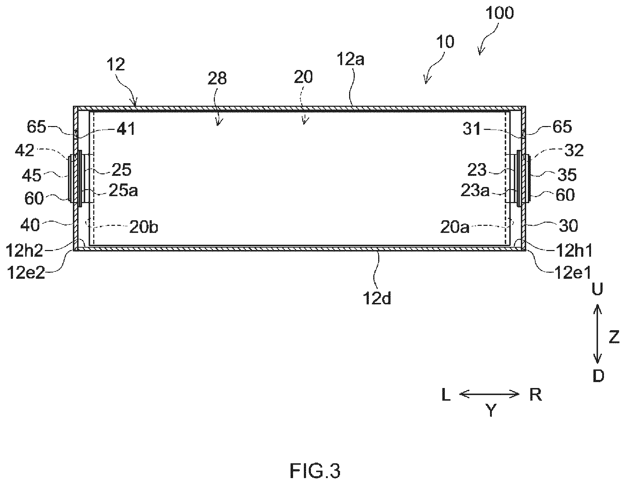

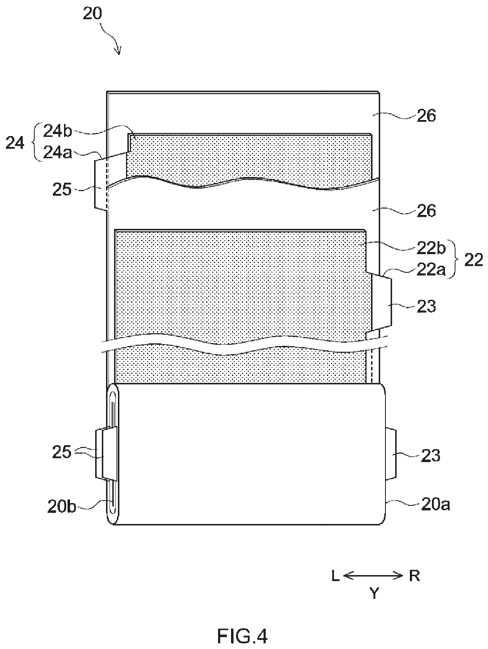

FIGS. 1 and 2 are perspective views of a power storage device 100. FIG. 3 is a schematic view of the power storage device 100. FIG. 3 schematically illustrates an internal structure of the power storage device 100 when a case 10 is fractured along wide width surface portions 12b and 12c. FIG. 3 does not show a sealing member inside the case 10. FIG. 4 is a schematic view of an electrode body 20.

A "power storage device" herein refers to a device capable of being charged and discharged repeatedly. The power storage device includes a secondary battery such as a lithium ion secondary battery and a nickel hydrogen battery. The power storage device includes a capacitor such as a lithium ion capacitor and an electric double layer capacitor. The following description is directed to the power storage device 100, using a lithium ion secondary battery as an example, together with a method for fabricating the power storage device 100.

### <Power Storage Device 100>

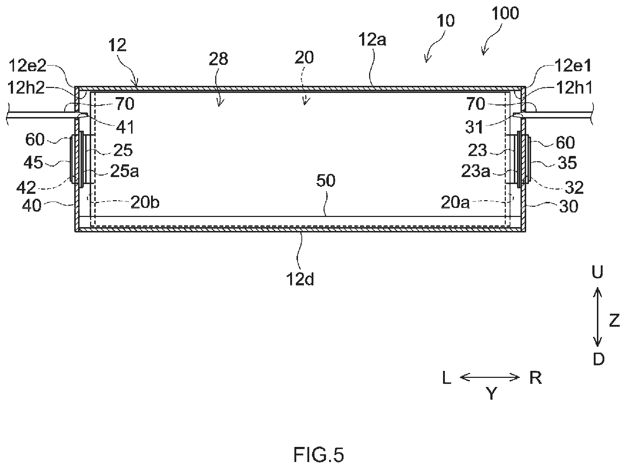

As illustrated in FIG. 3, the power storage device 100 includes a case body 12, an electrode body 20, an electrolyte 50 (see FIG. 5), a positive electrode terminal 35, a negative electrode terminal 45, a positive electrode sealing plate 30, and a negative electrode sealing plate 40. The case body 12, the positive electrode sealing plate 30, and the negative electrode sealing plate 40 will also be collectively referred to as a case 10.

### <Case 10>

The case 10 is a housing that houses the electrode body 20 and the electrolyte 50. As illustrated in FIGS. 1 and 2, an outer shape of the case 10 is a substantially flat and bottomed rectangular parallelepiped (square shape) in this embodiment. A material of the case 10 is not particularly limited. The case 10 can be made of a metal such as aluminium or an aluminium alloy, for example.

### <Case Body 12>

The case body 12 has at least one opening surface. As illustrated in FIG. 3, the case body 12 is a cylindrical member whose two opposed surfaces are open. The case body 12 has a rectangular cylindrical (rectangular tube) shape that is open at both ends in the long-side direction Y. In this embodiment, in the case body 12, two opposed surfaces with the smallest area (the left and right surfaces in the long-side direction Y) of the substantially rectangular parallelepiped case 10 are open. The case body 12 is open in end portions 12e1 and 12e2 at a first end (right side) and a second side (left side). The long side (dimension in the long-side direction Y) of the case body 12 is longer than the long side (dimension in the height-direction Z) and the short side (dimension in the short-side direction X) of each of openings 12h1 and 12h2 at both ends.

The case body 12 is formed from a single metal plate. The case body 12 is formed by bending a single metal plate into a rectangular cylindrical shape and joining seams (e.g., by welding).

As illustrated in FIGS. 1 and 2, the case body 12 includes a pair of opposed wide width surface portions 12b and 12c and a pair of opposed narrow width surface portions 12a and 12d. The pair of narrow width surface portions 12a and 12d are continuous with the pair of wide width surface portions 12b and 12c. The "wide width surface portion" refers to a portion of the case body 12 that constitutes a surface with the largest area when the power storage device 100 is assembled. The "narrow width surface portion" refers to a portion of the case body 12 that constitutes a surface with an area smaller than that of the wide width surface portion when the power storage device 100 is assembled. The area of the wide width surface portion is larger than that of the narrow width surface portion. The narrow width surface portions 12a and 12d and the wide width surface portions 12b and 12c are substantially rectangular. Dimensions along the long-side direction Y of the narrow width surface portions 12a and 12d and the wide width surface portions 12b and 12c are substantially the same. In the narrow width surface sections 12a and 12d, the dimensions along the long-side direction Y are longer than the dimensions along the shorter-side direction X. In the wide width surface sections 12b and 12c, the dimensions along the long-side direction Y are longer than the dimensions along the height direction Z.

The narrow width surface portion 12a is a portion constituting an upper surface of the case body 12. The narrow width surface portion 12a may include a gas release valve 13 that breaks when the internal pressure in the case 10 exceeds a predetermined value. The wide width surface portions 12b and 12c extend downward substantially perpendicularly from the narrow width surface portion 12a. The wide width surface portion 12b extends from one long side (front side in this embodiment) of the narrow width surface portion 12a. The wide width surface portion 12c extends from the other long side (rear side in this embodiment) of the narrow width surface portion 12a. The wide width surface portion 12b and the wide width surface portion 12c face each other in the short-side direction X. The wide width surface portions 12b and 12c are portions constituting side surfaces of the case body 12. The lower ends of the wide width surface portions 12b and 12c are connected to the narrow width surface portion 12d. The narrow width surface portion 12d extends substantially perpendicularly from the wide width surface portions 12b and 12c. The narrow width surface portion 12d is a portion constituting the bottom surface of the case body 12. The narrow width surface portion 12a and the narrow width surface portion 12d face each other in the height direction Z. In the embodiment described above, the narrow width surface portion 12a constitutes the upper surface of the case body 12, and the narrow width surface portion 12d constitutes the bottom surface of the case body 12. However, the present disclosure is not limited to this configuration. When using the power storage device 100, either the narrow width surface portions 12a and 12d or the wide width surface portions 12b and 12c may be arranged to constitute the upper and lower surfaces of the case body 12.

The narrow width surface portion 12d, which is one of the pair of narrow width surface portions 12a and 12d, has a continuous welding portion 12d1 continuous along the long-side direction Y (direction connecting the openings 12h1 and 12h2 at both ends). Welding of the narrow width surface portion 12d can be performed by laser welding, for example. The welding portion 12d1 may be formed in the narrow width surface portion 12a of the case body 12 or may be formed in the wide width surface portions 12b and 12c.

As illustrated in FIG. 3, in the long-side direction Y, the openings 12h1 and 12h2 are formed at both ends (end portions 12e1 and 12e2) of the case body 12. The openings 12h1 and 12h2 are defined by the short sides of the narrow width surface portions 12a and 12d and the wide width surface portions 12b and 12c. The opening 12h1 is formed in the end portion 12e1 on the first side (right side) of the case body 12. The opening 12h2 is formed in an end portion 12e2 on the second side (left side) of the case body 12. The openings 12h1 and 12h2 are substantially rectangular. In fabricating the power storage device, the electrode body 20 is inserted from the openings 12h1 and 12h2.

### <Electrode Body 20>

The electrode body 20 is housed in the case body 12 (case 10). As illustrated in FIG. 4, the electrode body 20 includes a positive electrode 22, a negative electrode 24, and a separator 26. In this embodiment, the electrode body 20 is a wound electrode body in which the strip-shaped positive electrode 22 and the strip-shaped negative electrode 24 are wound with the strip-shaped separator 26 interposed therebetween. In this embodiment, a winding axis of the electrode body 20 is set in the long-side direction Y. Accordingly, at the right side surface 20a and the left side surface 20b of the electrode body 20, surfaces where the positive electrode 22 and the negative electrode 24 are stacked with the separator 26 interposed therebetween are exposed. The structure of the electrode body 20 is not particularly limited and may be other known structures (such as a laminated electrode body) .

The positive electrode 22 includes a positive electrode current collecting foil 22a and a positive electrode active material layer 22b formed on at least one surface of the positive electrode current collecting foil 22a. The positive electrode current collecting foil 22a is made of a metal material with a predetermined conductivity. As the positive electrode current collecting foil 22a, a metal foil is used, for example, aluminium or an aluminium alloy can be used. The positive electrode active material layer 22b is a layer including a positive electrode active material. The positive electrode active material is a material capable of reversibly absorbing and desorbing charge carriers in relation to a negative electrode active material described later. The positive electrode active material is not particularly limited. Examples of the positive electrode active material include lithium transition metal composite oxides such as lithium cobaltate, lithium manganate, lithium nickelate, lithium nickel manganese composite oxide, and lithium nickel cobalt composite oxide. The positive electrode active material layer can contain additives such as a binder and a conductive material.

The negative electrode 24 includes a negative electrode current collecting foil 24a and a negative electrode active material layer 24b formed on at least one surface of the negative electrode current collecting foil 24a. The negative electrode current collecting foil 24a is made of a metal material with a predetermined conductivity. As the negative electrode current collecting foil 24a, a metal foil is used, for example, copper or a copper alloy can be used. The negative electrode active material layer 24b is a layer including a negative electrode active material. The negative electrode active material is a material capable of reversibly absorbing and desorbing charge carriers in relation to the positive electrode active material. The negative electrode active material is not particularly limited. Examples of the negative electrode active material include carbon materials, silicon-based materials, and mixed oxides of these materials. Examples of the carbon materials include graphite, hard carbon, soft carbon, and amorphous carbon. Examples of the silicon-based materials include silicon and silicon oxides. The negative electrode active material layer can contain additives such as a binder, a conductive material, and a thickener.

The separator 26 has a plurality of minute through holes through which charge carriers can pass. The separator can include a base material and a heat resistant layer (HRL) formed on the surface of the base material. As a base material, a resin porous film is preferably used. Examples of the base material include porous sheets (films) composed of polyolefins such as polyethylene (PE) and polypropylene (PP), and resins such as polyamide. The base material may have a single-layer structure or a multilayer structure of two or more layers. The heat resistant layer can contain ceramic particles and a binder. The separator may include an adhesive layer. The adhesive layer is a layer that has excellent adhesion to electrode plates (positive electrode and negative electrode). The adhesive layer can be formed on the surface of the separator. As the adhesive layer, resin materials are used, for example, a fluorine-based resin and an acrylic resin can be used. The adhesive layer may contain inorganic fillers and others.

The electrode body 20 includes a positive electrode tab 23 and a negative electrode tab 25 extending in opposite directions. The positive electrode tab 23 is a portion extending from an end of the electrode body 20 on a first side (right side) toward the first side. The positive electrode tab 23 is a portion where the positive electrode active material layer 22b is not formed and the positive electrode current collecting foil 22a is exposed. The positive electrode tab 23 is composed of a plurality of layers of the positive electrode current collecting foil 22a projecting to the first side. The positive electrode current collector 23a (see FIG. 3) is connected to the positive electrode tab 23. The positive electrode current collector 23a is a metal conductive member that is connected to the positive electrode terminal 35. The positive electrode current collector 23a can be made of a metal of the same type as the positive electrode current collecting foil 22a. The positive electrode current collector 23a is located at a position corresponding to the positive electrode tab 23.

The negative electrode tab 25 is a portion extending from an end of the electrode body 20 on a second side (left side) toward the second side. The negative electrode tab 25 is a portion where the negative electrode active material layer 24b is not formed and the negative electrode current collecting foil 24a is exposed. The negative electrode tab 25 is composed of a plurality of layers of the negative electrode current collecting foil 24a projecting on the second side. The negative electrode current collector 25a (see FIG. 3) is connected to the negative electrode tab 25. The negative electrode current collector 25a is a metal conductive member connected to the negative electrode terminal 45. The negative electrode current collector 25a can be made of a metal of the same type as the negative electrode current collecting foil 24a. The negative electrode current collector 25a is located at a position corresponding to the negative electrode tab 25. The electrode body 20 can be housed in the case 10 while being covered with an insulating film 28.

### <Insulating Film 28>

As illustrated in FIG. 3, the insulating film 28 is a film that covers the electrode body 20 along the inner surface of the case body 12. The insulating film 28 is formed in a cylindrical shape. The insulating film 28 is an insulation member, also known as an electrode holder, that covers the electrode body 20 and insulates the electrode body 20 from the case 10 (case body 12). A material for the insulating film 28 can be, but not limited to, a resin material such as polypropylene (PP) or polyethylene (PE), for example.

After the electrode body 20 is housed in the case body 12, the opening 12h1 is closed by the positive electrode sealing plate 30, and the opening 12h2 is closed by the negative electrode sealing plate 40.

### <Positive Electrode Sealing Plate 30>

The positive electrode sealing plate 30 (first sealing plate) is a member that closes one of two opposed surfaces. The positive electrode sealing plate 30 is attached to the end portion 12e1 of the case body 12 and closes the opening surface on the first side. The positive electrode sealing plate 30 is a plate member with a shape corresponding to the shape of the opening 12h1. The positive electrode sealing plate 30 has a shape along the short sides of the wide width surface portions 12b and 12c and the narrow width surface portions 12a and 12d. In this embodiment, the positive electrode sealing plate 30 is substantially rectangular. A material for the positive electrode sealing plate 30 is not particularly limited. The positive electrode sealing plate 30 can be made of a metal similar to a metal for the case body 12. The positive electrode sealing plate 30 can be made of a metal such as aluminium or an aluminium alloy, for example. The positive electrode sealing plate 30 has a first through hole 31. The positive electrode sealing plate 30 has a positive electrode attachment hole 32.

### <First Through Hole 31>

The first through hole 31 penetrates the positive electrode sealing plate 30. In this embodiment, the first through hole 31 is located above a central portion of the positive electrode sealing plate 30. The first through hole 31 has dimensions with which the electrolyte 50 (see FIG. 5) can be injected. The first through hole 31 is also referred to as an injection hole. In this embodiment, the first through hole 31 is substantially circular. The dimensions of the first through hole 31 are not particularly limited as long as the first through hole 31 has dimensions with which the electrolyte 50 can be injected from the outside to the inside of the case 10. The diameter of the first through hole 31 can be set to about 1 mm or more and about 5 mm or less (e.g., about 2 mm to about 4 mm) .

### <Positive Electrode Attachment Hole 32>

The positive electrode attachment hole 32 is a hole to which the positive electrode terminal 35 is attached. The positive electrode attachment hole 32 penetrates the positive electrode sealing plate 30. In this embodiment, the positive electrode attachment hole 32 is substantially circular. The positive electrode attachment hole 32 is located below the first through hole 31. The positive electrode attachment hole 32 is located in a center portion of the positive electrode sealing plate 30. The positive electrode attachment hole 32 can have a larger diameter than the first through hole 31. The positive electrode terminal 35 is attached to the positive electrode attachment hole 32 through a sealing member 60. The sealing member 60 hermetically seals the positive electrode attachment hole 32. As the sealing member 60, a material with excellent chemical resistance can be used. The sealing member 60 can be a resin member.

### <Positive Electrode Terminal 35>

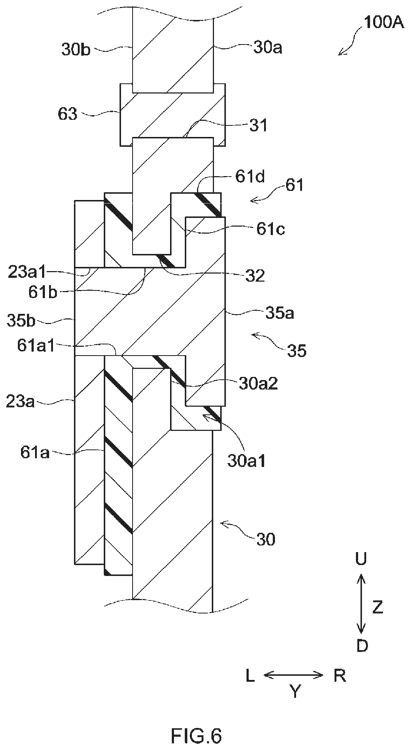

The positive electrode terminal 35 is a member that is connected to the electrode body 20 (see FIG. 3). The positive electrode terminal 35 can be made of a metal similar to a metal for the positive electrode current collecting foil 22a (see FIG. 4). As the positive electrode terminal 35, aluminium or an aluminium alloy can be used, for example. In this embodiment, the positive electrode terminal 35 includes a head portion 35a and a shaft portion 35b (see FIG. 6). The head portion 35a is a portion exposed to the outside of the case 10. The shaft portion 35b is a portion that is inserted into the case 10 and connected to the positive electrode current collector 23a. In this embodiment, the positive electrode current collector 23a is a plate-shaped member that is substantially parallel to the positive electrode sealing plate 30. The positive electrode current collector 23a has a through hole 23a1 (see FIG. 6).

The shaft portion 35b is a substantially cylindrical columnar portion. The outer diameter of the shaft portion 35b is set to be smaller than the inner diameter of the positive electrode attachment hole 32. The shaft portion 35b is inserted into the positive electrode attachment hole 32. The shaft portion 35b is connected to the positive electrode current collector 23a inside the case 10. Although not particularly limited, the shaft portion 35b can be connected to the periphery of the through hole 23a1 of the positive electrode current collector 23a by caulking, welding, or the like. The positive electrode terminal 35 is connected to the electrode body 20 through the positive electrode current collector 23a connected to the positive electrode tab 23.

The head portion 35a is located at one end (right side) of the shaft portion 35b. In this embodiment, the head portion 35a is housed in a recess 30a1 (see FIG. 6) provided on an outer surface 30a of the positive electrode sealing plate 30. The positive electrode sealing plate 30 may not have the recess 30a1. The head portion 35a expands radially outward with respect to the shaft portion 35b. The head portion 35a is substantially rectangular in plan view as seen along the axial direction of the shaft portion 35b. The shape of the head portion 35a is not particularly limited. The length of each side of the head portion 35a is larger than the inner diameter of the positive electrode attachment hole 32. The head portion 35a is connected to an external connecting member such as a bus bar on the outside of the case 10.

The negative electrode sealing plate 40 is attached to the end portion 12e2 opposite to the end portion 12e1 of the case body 12 to which the positive electrode sealing plate 30 is attached.

### <Negative Electrode Sealing Plate 40>

As illustrated in FIG. 3, the negative electrode sealing plate 40 (second sealing plate) closes the other surface of the two opposed surfaces. The negative electrode sealing plate 40 is attached to the end portion 12e2 of the case body 12 and closes the opening surface on the second side. The negative electrode sealing plate 40 is a plate member with a shape corresponding to the shape of the opening 12h2.

The negative electrode sealing plate 40 can be made of a member with a shape similar to the shape of the positive electrode sealing plate 30. In other words, the positive electrode sealing plate 30 and the negative electrode sealing plate 40 may be members with a common shape. The negative electrode sealing plate 40 has a second through hole 41. The negative electrode sealing plate 40 has a negative electrode attachment hole 42. In this embodiment, the negative electrode sealing plate 40 is made of a member with a structure similar to that of the positive electrode sealing plate 30. Description for the negative electrode sealing plate 40 already provided for the positive electrode sealing plate 30 will not be repeated as appropriate. The negative electrode terminal 45 is attached to the negative electrode attachment hole 42 through the sealing member 60.

### <Second Through Hole 41>

The second through hole 41 penetrates the negative electrode sealing plate 40. In this embodiment, in a manner similar to the first through hole 31, the second through hole 41 is located in a center portion of the negative electrode sealing plate 40. The second through hole 41 has dimensions with which the electrolyte 50 can be injected. The second through hole 41 is also referred to as an injection hole. The shape and dimensions of the second through hole 41 are the same as those of the first through hole 31, and thus, will not be described in detail.

As illustrated in FIGS. 1 and 2, the first through hole 31 and the second through hole 41 are located at rotationally symmetrical positions with respect to a center axis A of the case body 12. The center axis A is parallel to the positive electrode sealing plate 30 and the negative electrode sealing plate 40. The center axis A passes through an intermediate position between the positive electrode sealing plate 30 and the negative electrode sealing plate 40 and an intermediate position between the pair of wide width surface portions 12b and 12c. The center axis A extends along the height direction Z. In this embodiment, the center shaft A passes through the center of the narrow width surface portions 12a and 12d.

In this embodiment, the first through hole 31 is located in a center portion of the positive electrode sealing plate 30 in the short-side direction X. The second through hole 41 is located in a center portion of the negative electrode sealing plate 40 in the short-side direction X. The first through hole 31 and the second through hole 41 are both located substantially in center portions of the sealing plates having the first through hole 31 and the second through hole 41, respectively, in the short-side direction X. Accordingly, the first through hole 31 and the second through hole 41 are located at rotationally symmetrical positions with respect to the center axis A. The positions of the first through holes 31 and the second through holes 41 are not limited to these positions.

### <Negative Electrode Attachment Hole 42>

The negative electrode attachment hole 42 is a hole to which the negative electrode terminal 45 is attached. The negative electrode attachment hole 42 penetrates the negative electrode sealing plate 40. The shape, position, dimensions, and other features of the negative electrode attachment hole 42 are the same as those of the positive electrode attachment hole 32, and thus, will not be described in detail.

### <Negative Electrode Terminal 45>

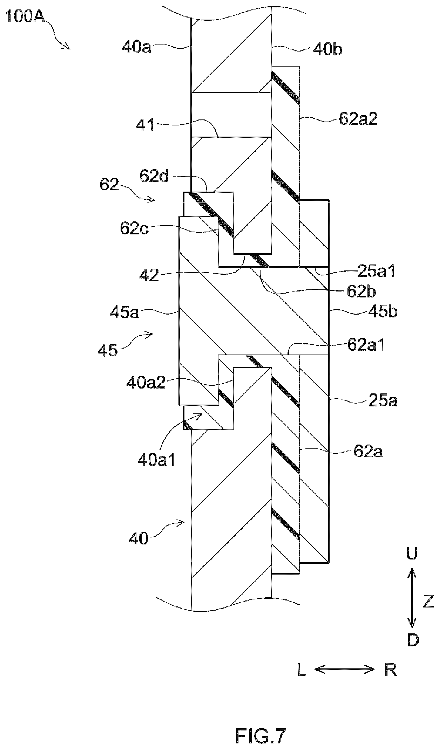

The negative electrode terminal 45 is connected to the electrode body 20 (see FIG. 3). The negative electrode terminal 45 can be made of a metal similar to a material for the negative electrode current collector 25a (see FIG. 4). As the negative electrode terminal 45, copper or a copper alloy, for example, can be used. In this embodiment, the negative electrode terminal 45 includes a head portion 45a and a shaft portion 45b (see FIG. 7). The shaft portion 45b is a portion that is inserted into the case 10 and connected to the negative electrode current collector 25a. The head portion 45a is exposed to the outside of the case 10. The head portion 45a is connected to an external connecting member such as a bus bar on the outside of the case 10. The shape and dimensions of the negative electrode terminal 45 are the same as those of the positive electrode terminal 35, and thus, detailed description thereof will not be repeated.

In manufacturing the power storage device, the positive electrode sealing plate 30 and the negative electrode sealing plate 40 are attached to the end portions 12e1 and 12e2 of the case body 12 after the electrode body 20 is inserted into the case body 12. From the insertion of the electrode body 20 into the case body 12 to the sealing of the case body 12 with the positive electrode sealing plate 30 and the negative electrode sealing plate 40, the following procedure, for example, can be employed.

The negative electrode current collector 25a is connected to the negative electrode tab 25 of the electrode body 20. The negative electrode current collector 25a and the negative electrode terminal 45 attached to the negative electrode sealing plate 40 are connected to each other. The negative electrode tab 25 extending along the long-side direction Y is folded. The electrode body 20 to which the negative electrode sealing plate 40 is attached is inserted into the case body 12 through the opening 12h2. The positive electrode current collector 23a is connected to the positive electrode tab 23 of the electrode body 20. The positive electrode current collector 23a and the positive electrode terminal 35 attached to the positive electrode sealing plate 30 are connected to each other. The positive electrode tab 23 extending along the long-side direction Y is folded. The positive electrode sealing plate 30 and the negative electrode sealing plate 40 are joined to the end portions 12e1 and 12e2 of the case body 12, respectively. The joining of the positive electrode sealing plate 30 and the negative electrode sealing plate 40 to the case body 12 can be carried out by, for example, laser welding. An insulating member for preventing direct contact of the positive electrode sealing plate 30 and the negative electrode sealing plate 40 with the electrode body 20 may be provided between the positive electrode sealing plate 30 and the electrode body 20 and between the negative electrode sealing plate 40 and the electrode body 20.

When the electrode body 20 is inserted into the case body 12 and the openings 12h1 and 12h2 of the case body 12 are closed by the positive electrode sealing plate 30 and the negative electrode sealing plate 40, the electrolyte 50 is injected into the case 10.

### <Electrolyte 50>

As the electrolyte 50, an electrolyte used for typical power storage devices can be used without any particular limitation. Examples of the electrolyte include a nonaqueous electrolyte in which a supporting electrolyte is dissolved in a nonaqueous solvent. In nonaqueous electrolytes used for lithium ion secondary batteries, carbonate-based solvents such as ethylene carbonate, dimethyl carbonate, and ethyl methyl carbonate can be used as nonaqueous solvents. As a supporting electrolyte, fluorine-containing lithium salts such as LiPF₆ can be used. The electrolyte 50 may contain an additive as necessary.

FIG. 5 is a schematic view illustrating the state of injecting the electrolyte 50 into the case 10. FIG. 5 schematically illustrates a cross section of the power storage device 100 during the injection. As illustrated in FIG. 5, in the injection of the electrolyte 50, the narrow width surface portion 12a constituting the upper surface of the case body 12 is oriented to face upward such that the first through hole 31 and the second through hole 41 are located above. The electrode bodies 20 can be impregnated with the injected electrolyte 50 from both the side surfaces 20a and 20b. A nozzle 70 is inserted into the first through hole 31 and the second through hole 41, and electrolyte 50 is injected. The electrode body 20 is impregnated with the electrolyte 50 injected into the case 10 from the side surfaces 20a and 20b of the electrode body 20 toward a center portion of the electrode body 20. When a predetermined amount of the electrolyte 50 is injected, the injection of the electrolyte 50 is stopped. After the injection, the first through hole 31 and the second through hole 41 can be sealed by the sealing member 65 (see FIG. 3).

The sealing member 65 is not particularly limited as long as the sealing member 65 can seal the through holes (the first through holes 31 and the second through holes 41 in this embodiment). The sealing member 65 may be a metal blind rivet. After the sealing, treatments such as initial charging and aging are performed, and the power storage device 100 is fabricated.

The inventor of the present disclosure is considering using a case body whose two opposed surfaces are open, and closing one of the surfaces with a positive electrode sealing plate to which a positive electrode terminal is attached and closing the other surface with a negative electrode sealing plate to which a negative electrode terminal is attached. An electrode body of this power storage device includes a positive electrode tab at one end in the long-side direction and a negative electrode tab at the other end. Accordingly, in the case, space for the positive electrode tab and the negative electrode tab can be located at both ends in the long-side direction. This allows the space required for arranging the positive electrode tab and the negative electrode tab near the opening to be small, resulting the possibility of size reduction of dead space inside the case. With the size reduction of the dead space inside the case, the volume of the electrode body inside the case can be increased accordingly. Consequently, electrical capacitance of the power storage device can be increased. This effect can increase as the long side of the case body increases as compared to the long sides and the short sides of the openings at both ends.

However, as the length of the long sides of the case body (the distance between the positive electrode sealing plate and the negative electrode sealing plate) increases, it can take time to impregnate the electrode material with the electrolyte after the electrolyte is injected into the case.

In the embodiment described above, the power storage device 100 includes the case body 12, the electrode body 20, the electrolyte 50, the positive electrode terminal 35, the negative electrode terminal 45, the positive electrode sealing plate 30, and the negative electrode sealing plate 40. The case body 12 has two opposed surfaces that are open. The electrode body 20 is housed in the case body 12. The electrolyte 50 is housed in the case body 12. The positive electrode terminal 35 is connected to the electrode body 20. The negative electrode terminal 45 is connected to the electrode body 20. The positive electrode sealing plate 30 has the positive electrode attachment hole 32 to which the positive electrode terminal 35 is attached. The positive electrode sealing plate 30 closes one of the two opposed surfaces (the surface with the opening 12h1 in this embodiment). The negative electrode sealing plate 40 has the negative electrode attachment hole 42 to which the negative electrode terminal 45 is attached. The negative electrode sealing plate 40 closes the other surface of the two opposed surfaces (the surface with the opening 12h2 in this embodiment). The positive electrode sealing plate 30 has the first through hole 31 through which the electrolyte 50 can be injected. The negative electrode sealing plate 40 has the second through hole 41 through which the electrolyte 50 can be injected. In the battery device 100, the electrolyte 50 can be injected from both sides of the positive electrode sealing plate 30 and the negative electrode sealing plate 40. Since the injection time of the electrolyte 50 is shortened, the power storage device 100 shows enhanced productivity. The enhanced productivity of the power storage device 100 can reduce manufacturing costs.

In the embodiment described above, in the long-side direction Y, the side surfaces 20a and 20b of the electrode body 20 have exposed surfaces where the positive electrode 22 and the negative electrode 24 are stacked with the separator 26 interposed therebetween (see FIG. 4). The electrolyte 50 is injected from the surfaces (the positive electrode sealing plate 30 and the negative electrode sealing plate 40) facing the side surfaces 20a and 20b of the electrode body 20 in the long-side direction Y. Since the distance from the side surfaces 20a and 20b of the electrode body 20 to the positive and negative electrode sealing plates 30 and 40 through which the electrolyte 50 is injected is small, the electrolyte 50 can quickly reach the side surfaces 20a and 20b of the electrode body 20. This enables faster impregnation of the electrode body 20 with the electrolyte 50, resulting in enhanced productivity of the power storage device 100. Such effects are enhanced as the distance between the positive and negative sealing plates 30 and 40 and the side surfaces 20a and 20b of the electrode body 20 decreases.

In the embodiment described above, the first through hole 31 and the second through hole 41 are located at rotationally symmetrical positions with respect to the center axis A of the case body 12, and the center axis A is parallel to the positive electrode sealing plate 30 and the negative electrode sealing plate 40 (see FIGS. 1 and 2). With this configuration, the position at which the nozzle 70 is inserted during injection is at the same position in the positive electrode sealing plate 30 and the negative electrode sealing plate 40. Accordingly, a common device and a common procedure for injection can be used in the positive electrode sealing plate 30 and the negative electrode sealing plate 40.

The injection of the electrolyte 50 does not need to be performed from both sides of the positive electrode sealing plate 30 and the negative electrode sealing plate 40. In a case where the electrolyte 50 is injected from one of the first through hole 31 and the second through hole 41 in the positive electrode sealing plate 30 and the negative electrode sealing plate 40, the injection can be performed with the same device in the same procedure, regardless of which through hole is used for the injection.

In the embodiment described above, the positive electrode sealing plate 30 and the negative electrode sealing plate 40 are members with a common shape. Thus, it is unnecessary to prepare different members as the positive electrode sealing plate 30 and the negative electrode sealing plate 40. This enhances productivity of the power storage device 100.

In the embodiment described above, the sealing member 60 is located between the positive electrode sealing plate 30 and the positive electrode terminal 35 and between the negative electrode sealing plate 40 and the negative electrode terminal 45. The configuration of the sealing member 60 may be different between the positive electrode side and the negative electrode side. A power storage device 100A according to another embodiment in which different sealing members are used on the positive electrode side and the negative electrode side will now be described.

### <Power Storage Device 100A>

In a manner similar to the power storage device 100 (see FIGS. 1 and 2), the power storage device 100A includes a case body 12, an electrode body 20, an electrolyte 50, a positive electrode terminal 35, a negative electrode terminal 45, a positive electrode sealing plate 30, and a negative electrode sealing plate 40. The power storage device 100A is the same as the power storage device 100 except for the sealing members provided on the positive electrode sealing plate 30 and the negative electrode sealing plate 40, and description for the same components will not be repeated as appropriate.

FIG. 6 is a cross-sectional view of the positive electrode sealing plate 30 of the power storage device 100A. FIG. 7 is a cross-sectional view of the negative electrode sealing plate 40 of the power storage device 100A. FIGS. 6 and 7 show cross sections of the positive electrode sealing plate 30 and the negative electrode sealing plate 40 along wide width surface portions 12b and 12c. FIGS. 6 and 7 do not show a positive electrode tab 23 and a negative electrode tab 25. As illustrated in FIGS. 1 and 2, the power storage device 100A includes a first sealing member 61, a second sealing member 62, and a third sealing member 63. The first sealing member 61 is interposed between the positive electrode terminal 35 and the positive electrode sealing plate 30. The second sealing member 62 is interposed between the negative electrode terminal 45 and the negative electrode sealing plate 40.

### <First Sealing Member 61>

As illustrated in FIG. 6, the first sealing member 61 seals space between a positive electrode attachment hole 32 and the positive electrode terminal 35. The first sealing member 61 is located between the positive electrode sealing plate 30, and the positive electrode terminal 35 and a positive electrode current collector 23a, and insulates the positive electrode sealing plate 30 from the positive electrode terminal 35 and the positive electrode current collector 23a. As the first sealing member 61, a material with excellent chemical resistance can be used. The first sealing member 61 can be a resin member. As the first sealing member 61, a material similar to the sealing member 60 can be used. The first sealing member 61 hermetically seals the positive electrode attachment hole 32. The first sealing member 61 is shaped by integral resin molding with the positive electrode sealing plate 30 and the positive electrode terminal 35. The integrated resin molding will be described along with the second sealing member 62 (see FIG. 7) described later.

The first sealing member 61 includes a flat plate portion 61a, a cylindrical portion 61b, a seat portion 61c, and a side wall portion 61d. In this embodiment, the first sealing member 61 is constituted by a single member. In other words, the flat plate portion 61a, the cylindrical portion 61b, the seat portion 61c, and the side wall portion 61d are integrally formed.

The flat plate portion 61a is disposed inside the case 10. The flat plate portion 61a is a flat plate-shaped portion along an inner surface 30b of the positive electrode sealing plate 30. The flat plate portion 61a is substantially rectangular. The flat plate portion 61a is interposed between the inner surface 30b of the positive electrode sealing plate 30 and the positive electrode current collector 23a substantially parallel to the positive electrode sealing plate 30. The flat plate portion 61a is longer than the positive electrode current collector 23a in the top-bottom direction, and insulates the positive electrode sealing plate 30 and the positive electrode current collector 23a from each other. The flat plate portion 61a has a through hole 61a1 through which a shaft portion 35b of the positive electrode terminal 35 is inserted. The cylindrical portion 61b extends substantially perpendicularly from the edge of the through hole 61a1.

The cylindrical portion 61b is located to the positive electrode attachment hole 32 of the positive electrode sealing plate 30. The cylindrical portion 61b extends along the inner peripheral surface of the positive electrode attachment hole 32 and the outer peripheral surface of the shaft portion 35b of the positive electrode terminal 35. The cylindrical portion 61b is substantially cylindrical. The cylindrical portion 61b extends from the inside of the case 10 toward the outside. The cylindrical portion 61b is provided from the inner surface 30b of the positive electrode sealing plate 30 to a bottom portion 30a2 of a recess 30a1 formed on an outer surface 30a. Accordingly, the cylindrical portion 61b insulates the positive electrode sealing plate 30 from the shaft portion 35b of the positive electrode terminal 35. Further, the cylindrical portion 61b is located to the positive electrode attachment hole 32 and ensures hermeticity of the case 10. The seat portion 61c expands radially outward from the right end of the cylindrical portion 61b.

The seat portion 61c is a flat plate-shaped portion along the bottom 30a2 of the recess 30a1 of the positive electrode sealing plate 30. The seat portion 61c is interposed between the bottom portion 30a2 of the recess 30a1 and the lower surface of a head portion 35a of the positive electrode terminal 35. Accordingly, the seat portion 61c insulates the positive electrode sealing plate 30 and the head portion 35a from each other. The side wall portion 61d extends from the outer end of the seat portion 61c along the inner side surface of the recess 30a1.

The side wall portion 61d is a cylindrical portion along the inner side surface of the recess 30a1. In this embodiment, the recess 30a1 and the head portion 35a are substantially rectangular. Accordingly, the side wall portion 61d has a substantially rectangular cylindrical shape. The side wall portion 61d is interposed between the inner side surface of the recess 30a1 and the side surface of the head portion 35a of the positive electrode terminal 35. Accordingly, the side wall portion 61d insulates the positive electrode sealing plate 30 and the head portion 35a from each other.

### <Second Sealing Member 62>

As illustrated in FIG. 7, the second sealing member 62 seals space between the negative electrode attachment hole 42 and the negative electrode terminal 45. The second sealing member 62 is disposed between the negative electrode sealing plate 40, and the negative electrode terminal 45 and the negative electrode current collector 25a, and insulates the negative electrode sealing plate 40 from the negative electrode terminal 45 and the negative electrode current collector 25a. As the second sealing member 62, a material with excellent chemical resistance can be used. The second sealing member 62 can be a resin member. A material similar to the sealing member 60 can be used as the second sealing member 62. The second sealing member 62 hermetically seals the negative electrode attachment hole 42. The second sealing member 62 includes a flat plate portion 62a, a cylindrical portion 62b, a seat portion 62c, and a side wall portion 62d. In this embodiment, in a manner similar to the first sealing member 61, the second sealing member 62 is constituted by a single member. In other words, the flat plate portion 62a, the cylindrical portion 62b, the seat portion 62c, and the side wall portion 62d are integrally formed. The second sealing member 62 has a shape similar to the shape of the first sealing member 61 (see FIG. 6), except for the flat plate portion 62a. Thus, the cylindrical portion 62b, the seat portion 62c, and the side wall portion 62d of the second sealing member 62 will not be described again.

The flat plate portion 62a is disposed inside the case 10 in a manner similar to the flat plate portion 61a of the first sealing member 61. The flat plate portion 62a is a flat plate-shaped portion along an inner surface 40b of the negative electrode sealing plate 40. The flat plate portion 62a is interposed between the inner surface 40b of the negative electrode sealing plate 40 and the negative electrode current collector 25a substantially parallel to the negative electrode sealing plate 40. The flat plate portion 62a is longer than the negative electrode current collector 25a in the top-bottom direction, and insulates the negative electrode sealing plate 40 and the negative electrode current collector 25a from each other. The flat plate portion 62a has a through hole 62a1 through which the shaft portion 45b of the negative electrode terminal 45 is inserted. The cylindrical portion 62b extends substantially perpendicularly from the edge of the through hole 62a1.

In this embodiment, the flat plate portion 62a includes an extension portion 62a2 extending above the upper end of the negative electrode current collector 25a. The extension portion 62a2 is a flat plate-shaped portion extending along the inner surface 40b of the negative electrode sealing plate 40. The extension portion 62a2 extends above the second through hole 41 located in an upper portion of the negative electrode sealing plate 40. In other words, the upper end of the extension part 62a2 is located above the second through hole 41. Further, the width of the extension portion 62a2 is larger than the diameter of the second through hole 41. Accordingly, the extension portion 62a2 of the flat plate portion 62a seals the second through hole 41.

The second sealing member 62 is shaped by integral resin molding with the negative electrode sealing plate 40 and the negative electrode terminal 45.

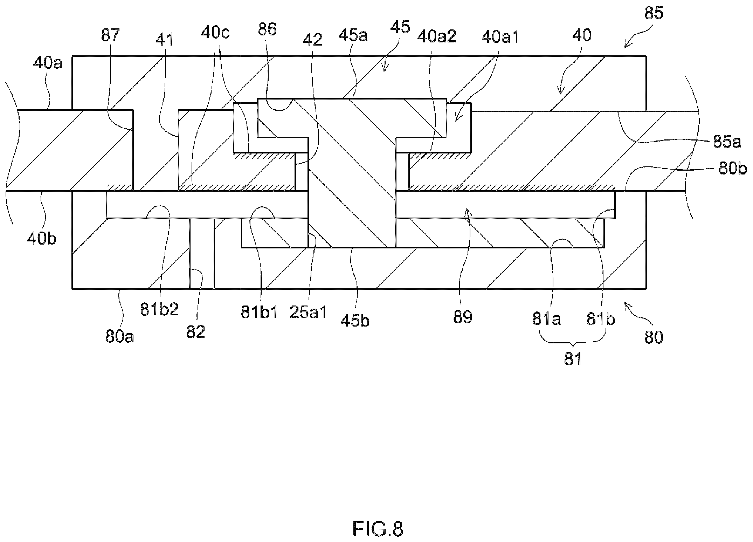

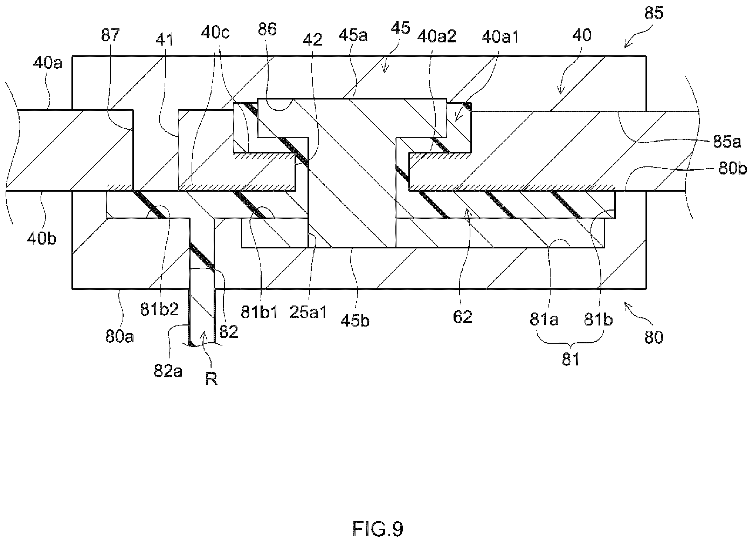

FIGS. 8 and 9 are schematic views showing the procedure of integrally resin molding the second sealing member 62 with the negative electrode sealing plate 40 and the negative electrode terminal 45. As illustrated in FIG. 8, the integral resin molding is performed using molds 80 and 85. The molds 80 and 85 include a lower die 80 and an upper die 85. An example of the procedure for integral resin molding will be described below along with a configuration of the dies 80 and 85.

First, the negative electrode current collector 25a, the negative electrode sealing plate 40, and the negative electrode terminal 45 are placed on the lower die 80. The negative electrode current collector 25a, the negative electrode sealing plate 40, and the negative electrode terminal 45 will also be referred to as the current collector 25a, the terminal 45, and the sealing plate 40, respectively.

The lower die 80 has a recess 81 on which the current collector 25a is disposed. The recess 81 includes a first portion 81a where the current collector 25a is disposed, and a second portion 81b into which resin flows. The first portion 81a constitutes a lower portion of the recess 81. The second portion 81b constitutes an upper portion of the recess 81. Both the first portion 81a and the second portion 81b are formed at positions overlapping with the attachment hole 42 when the sealing plate 40 is placed on the lower die 80.

The first portion 81a is formed along the outer shape of the current collector 25a. In this embodiment, the first portion 81a has a shape that is recessed in a substantially rectangular solid shape. In a plan view along the depth direction of the recess 81, the second portion 81b has dimensions with which the second portion 81b covers the first portion 81a. In other words, the second portion 81b protrudes from the first portion 81a. The second portion 81b has dimensions with which the second portion 81b covers the second through hole 41 and the attachment hole 42 when the sealing plate 40 is placed on the lower die 80. The second portion 81b includes a portion 81b2 extending toward the second through hole 41 from a portion 81b1 interposed between the first portion 81a and the sealing plate 40. The portion 81b2 extends from the portion 81b1 interposed between the first portion 81a and the sealing plate 40 toward the second through hole 41 to overlap with the second through hole 41. An injection hole 82 for injecting resin is connected to the second portion 81b. The injection hole 82 penetrates the lower die 80 from the lower surface 80a of the lower die 80.

The current collector 25a is placed on the first portion 81a of the recess 81 of the lower die 80. The sealing plate 40 is placed on an upper surface 80b (the surface facing the upper die 85) of the lower die 80. At this time, the sealing plate 40 is placed on the lower die 80 such that the second through hole 41 and the attachment hole 42 of the sealing plate 40 overlap with the second portion 81b. The terminal 45 is placed on the lower die 80 by inserting the shaft portion 45b of the terminal 45 into the attachment hole 42 such that the lower end of the shaft portion 45b is inserted into the through hole 25a1 of the current collector 25a. The head portion 45a of the terminal 45 projects above an outer surface 40a of the sealing plate 40.

After the current collector 25a, the sealing plate 40, and the terminal 45 are placed on the lower die 80, the upper die 85 is placed on the sealing plate 40. The upper die 85 has dimensions with which the upper die 85 covers the second through hole 41 and the attachment hole 42. The upper die 85 has a recess 86 in which the head portion 45a of the terminal 45 is housed. The recess 86 is formed on the surface (the surface facing the lower die 80) 85a that is overlaid on the sealing plate 40. The recess 86 has dimensions with which the recess 86 covers the head portion 45a in a plan view along the depth direction of the recess 86. The depth of the recess 86 is substantially equal to the length in which the head portion 45a projects from the outer surface 40a of the sealing plate 40. Accordingly, when the upper die 85 is placed on the sealing plate 40, the upper surface of the head portion 45a is in contact with the bottom of the recess 86 of the upper die 85. The upper die 85 may have a projection 87 that is inserted into the second through hole 41 of the sealing plate 40. The projection 87 has an outer diameter substantially equal to the inner diameter of the second through hole 41. The length of the projection 87 is substantially equal to the thickness of the sealing plate 40.

When the current collector 25a, the sealing plate 40, and the terminal 45 are placed in the molds 80 and 85, space 89 is defined inside the molds 80 and 85. The space 89 is defined between the second portion 81b of the recess 81 of the lower die 80, and the attachment hole 42 for the terminal 45 and the sealing plate 40.

As illustrated in FIG. 9, a resin R is injected into the space 89 from the injection hole 82 of the lower die 80. The resin R is injected into the space 89 inside the molds 80 and 85 through a transfer pipe 82a from an unillustrated resin supply device. After the injection of the resin R, the molds 80 and 85 are cooled. Accordingly, the second sealing member 62, the sealing plate 40, and the terminals 45 are integrally molded with the second sealing member 62 interposed between the sealing plate 40, and the terminals 45 and the current collector 25a.

The sealing plate 40 and the terminal 45 may be subjected to a treatment for enhancing bondability with the second sealing member 62. In this embodiment, the sealing plate 40 includes a roughened surface portion 40c where fine irregularities are formed on the surface. The roughened surface portion 40c is located at the interface with the flat plate portion 62a of the second sealing member 62 and on the bottom portion 40a2 of the recess 40a1. On the outer surface 40a and inner surface 40b of the sealing plate 40, the roughened surface portion 40c is provided around the attachment hole 42. Accordingly, the attachment hole 42 can be sealed more hermetically by the second sealing member 62. On the inner surface 40b of the sealing plate 40, the roughened surface portion 40c is provided around the second through hole 41. The roughened surface portion 40c extends from the attachment hole 42 to the second through hole 41.

The roughened surface portion 40c can be formed by a treatment such as laser irradiation, sand blasting, or chemical etching. The surface roughness of the roughened surface portion 40c is higher than that of a portion not subjected to the roughening treatment. The roughened surface portion 40c has fine irregularities so that the resin R easily enters these fine irregularities during injection of the resin R into the molds 80 and 85. This can enhance joint strength between the sealing plate 40 and the second sealing member 62 after the resin R is hardened. The surface roughness of the roughened surface portion 40c can be appropriately set depending on, for example, viscosity of the resin R. The roughened surface portion may also be provided on the interface between the terminal 45 and the second sealing member 62 in the terminal 45.

After the hardening of the resin R, the sealing plate 40 with which the second sealing member 62 is integrally molded is removed from the molds 80 and 85. Through the foregoing procedure, the second sealing member 62 can be integrally molded with the sealing plate 40 and the terminal 45. The terminal 45 and the current collector 25a can be connected by welding, caulking, or other methods after the sealing plate 40 is removed from the molds 80 and 85.

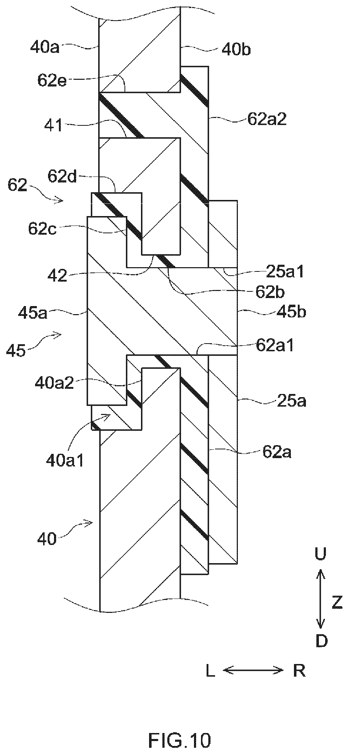

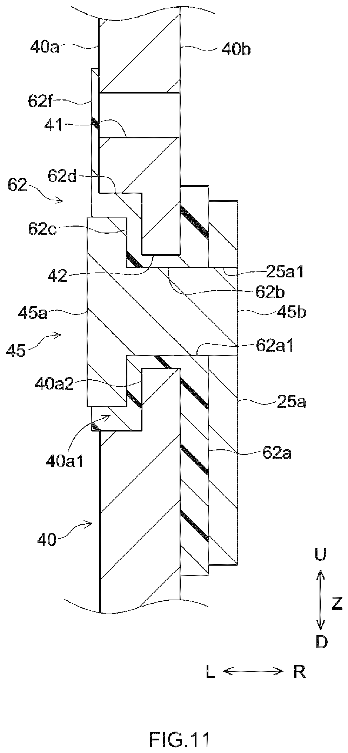

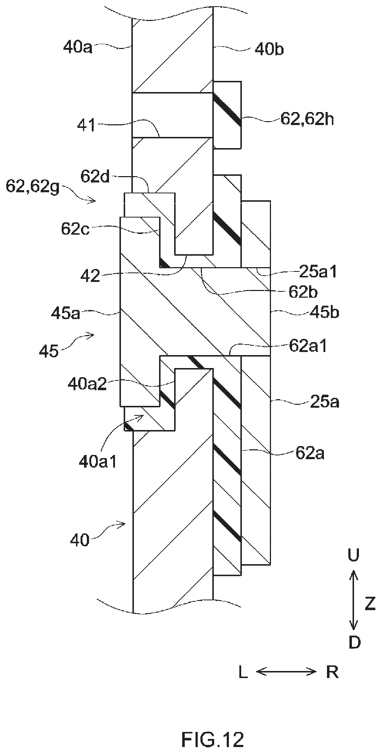

The configuration of the second sealing member 62 is not limited to the configuration described above. FIGS. 10 through 12 are schematic views illustrating second sealing members 62 according to other embodiments. The second sealing members 62 illustrated in FIGS. 10 through 12 can be produced by changing the shape of the molds 80 and 85. The second sealing member 62 illustrated in FIG. 10 has a portion 62e that enters the second through hole 41. The portion 62e that enters the second through hole 41 is in contact with the inner peripheral surface of the second through hole 41 and is housed in the second through hole 41. Accordingly, the sealing member 62 is less likely to come off from the second through hole 41. In addition, hermeticity of the second through hole 41 is increased. The portion 62e filling the second through hole 41 extends upward from an extension portion 62a2. The second sealing member 62 illustrated in FIG. 11 has a portion 62f that seals the second through hole 41 from the outer surface 40a of the sealing plate 40. The portion 62f that seals the second through hole 41 extends from the upper end of the side wall portion 62d toward the second through hole 41 and seals the second through hole 41. The second sealing member 62 illustrated in FIG. 12 includes a first member 62g filling a gap between the attachment hole 42 and the terminal 45, and a second member 62h that seals the second through hole 41. In other words, the first member 62g of the second sealing member 62 and the second member 62h of the second sealing member 62 are different members. From the viewpoint of more firmly joining the second sealing member 62 and the sealing plate 40, the sealing plate 40 can have a roughened surface portion 40c (see FIGS. 8 and 9) at the interface that contacts the second sealing member 62 illustrated in FIGS. 10 through 12.

Integral resin molding of the first sealing member 61 with the positive electrode sealing plate 30 and the positive electrode terminal 35 can be carried out by the same procedure as that described above. In addition, the integral resin molding of the first sealing member 61 with the positive electrode sealing plate 30 and the positive electrode terminal 35 is performed such that the first through hole 31 of the positive electrode sealing plate 30 is not closed. For example, the integral resin molding can be performed using the lower die 80 described above with a recess 81 not including a portion 81b2 extending toward the second through hole 41.

In the embodiment described above, the first sealing member 61 is shaped by integral resin molding with the positive electrode sealing plate 30 and the positive electrode terminal 35. The second sealing member 62 is shaped by integral resin molding with the negative electrode sealing plate 40 and the negative electrode terminal 45. Accordingly, each of space between the positive sealing plate 30 and the positive electrode terminal 35 and space between the negative sealing plate 40 and the negative electrode terminal 45 can be sealed by a single sealing member. Accordingly, insulation and sealing between the sealing plate and the terminal can be achieved with a minimum number of parts. In addition, a sealing member is formed by single resin molding. Thus, space between the sealing plate and the terminal can be sealed with a small number of steps.

The positive electrode sealing plate 30 with the first sealing member 61 and the negative electrode sealing plate 40 with the second sealing member 62 are attached to the case body 12. When the openings 12h1 and 12h2 of the case body 12 are closed by the positive electrode sealing plate 30 and the negative electrode sealing plate 40, the electrolyte 50 is injected into the case 10.

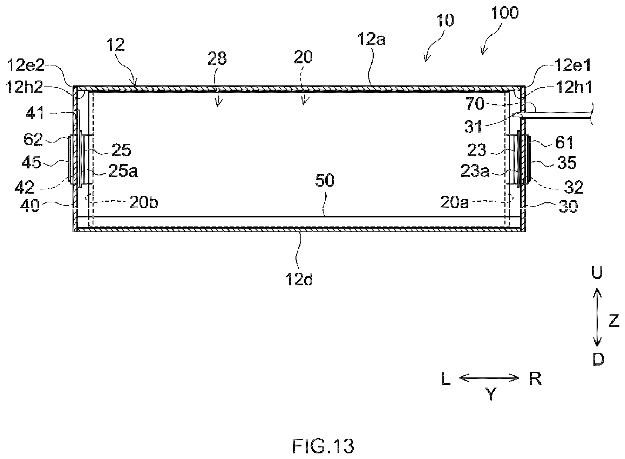

FIG. 13 is a schematic view illustrating the state of injecting the electrolyte 50 into the case 10. In this embodiment, the second through hole 41 formed in the negative electrode sealing plate 40, in the positive electrode sealing plate 30 and the negative electrode sealing plate 40, is sealed by the second sealing member 62 (see FIG. 7). The first through hole 31 formed in the positive electrode sealing plate 30 is not sealed (see FIG. 6). As illustrated in FIG. 13, a nozzle 70 is inserted into the unsealed first through hole 31, and the electrolyte 50 is injected. After the injection of the electrolyte 50, the first through hole 31 into which the nozzle 70 is inserted is sealed by the sealing member 63 (see FIG. 1).

### <Third Sealing Member 63>

As illustrated in FIG. 1, the third sealing member 63 seals one of the first through hole 31 and the second through hole 41. The third sealing member 63 seals one of the first through hole 31 and the second through hole 41 that is not sealed by the first sealing member 61 and the second sealing member 62. In this embodiment, the third sealing member 63 seals the first through hole 31 as an injection hole. The third sealing member 63 is not particularly limited as long as the third sealing member 63 can seal the injection hole. As the third sealing member 63, a blind rivet can be used, for example.

Thus, one of the first through hole 31 and the second through hole 41 (the first through hole 31 in this embodiment) is sealed by the third sealing member 63. Further, the other through hole (the second through hole 41) of the first through hole 31 and the second through hole 41 is sealed by the sealing member (the second sealing member 62) provided in the sealing plate (the negative electrode sealing plate 40) having the other through hole (the second through hole 41) of the first sealing member 61 and the second sealing member 62.

The second sealing member 62 described above includes a first sealing portion 62b and a second sealing portion 62a2 (see FIG. 7). The first sealing portion 62b and the second sealing portion 62a2 are integrally formed. The first sealing portion 62b seals space between the negative electrode attachment hole 42 and the negative electrode terminal 45. In this embodiment, the cylindrical portion 62b corresponds to the first sealing portion 62b. The second sealing portion 62a2 seals another through hole (the second through hole 41 in this embodiment) different from the negative electrode attachment hole 42. In this embodiment, the extension portion 62a2 of the flat plate portion 62a corresponds to the second sealing portion 62a2.

The through holes that enable injection are formed in the positive electrode sealing plate 30 and the negative electrode sealing plate 40. In this embodiment, the second through hole 41 of the negative electrode sealing plate 40 is previously sealed by the second sealing member 62 that seals the negative electrode attachment hole 42 before injection. In other words, the second through hole 41 and the negative electrode attachment hole 42 are sealed by one second sealing member 62. This reduces the number of parts used for sealing the holes formed in the negative electrode sealing plate 40. Further, the second through hole 41 and the negative electrode attachment hole 42 are sealed in the same process. This eliminates the need for processes of sealing the second through hole 41 of the negative electrode sealing plate 40 individually. The reduction of the number of parts and the number of process steps can enhance productivity of the power storage device.

The positive electrode sealing plate 30 and the negative electrode sealing plate 40 may be members with a common shape. Since the common member can be used for the positive electrode sealing plate 30 and the negative electrode sealing plate 40, the number of process steps required for design of the sealing plates and other processes can be reduced. Furthermore, the positive electrode sealing plate 30 and the negative electrode sealing plate 40 can be sealed only by using the common member as the positive electrode sealing plate 30 and the negative electrode sealing plate 40 and by changing the configuration of the sealing members (the first sealing member 61 and the second sealing member 62 in this embodiment). The power storage device with this configuration has enhanced productivity because the common sealing plates are used and the holes formed in the sealing plates are sealed with a small number of process steps.

The configuration of the second sealing member 62 described above is also applicable to devices other than the power storage device 100A including the case body 12 whose two opposed surfaces are open and the positive electrode sealing plate 30 and the negative electrode sealing plate 40 closing the openings 12h1 and 12h2, respectively.

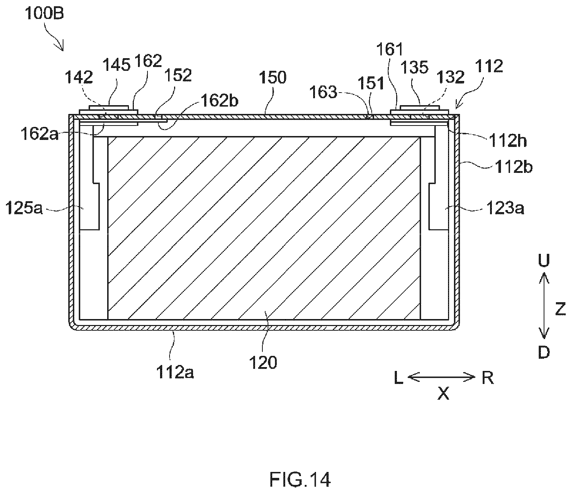

FIG. 14 is a schematic view of a power storage device 100B. As illustrated in FIG. 14, the power storage device 100B includes a case body 112, an electrode body 120, a positive electrode terminal 135, a negative electrode terminal 145, a sealing plate 150, and a sealing member 162. The electrode body 120 is connected to the positive electrode terminal 135 through a positive electrode current collector 123a. The electrode body 120 is connected to the negative electrode terminal 145 through a negative electrode current collector 125a.

The case body 112 has a bottomed rectangular cylindrical shape. The case body 112 includes a bottom surface 112a and a side surface 112b. The bottom surface 112a is substantially rectangular. The side surface 112b extends upward from each side of the bottom surface 112a and has a substantially rectangular cylindrical shape. The upper surface (the surface facing the bottom surface 112a) of the case body 112 has an opening 112h. The opening 112h is closed by the sealing plate 150. The sealing plate 150 has a positive electrode attachment holes 132, a negative electrode attachment hole 142, and through holes 151 and 152. The positive electrode terminal 135 is attached to the positive electrode attachment hole 132 through the sealing member 161. The negative electrode terminal 145 is attached to the negative electrode attachment hole 142 through the sealing member 162. The positive electrode attachment hole 132 is located in a left end portion of the sealing plate 150. The negative electrode terminal 145 is located in a right end portion of the sealing plate 150. Each of the through holes 151 and 152 has dimensions with which an electrolyte can be injected. The first through hole 151 is located closer to the positive electrode attachment hole 132 than the negative electrode attachment hole 142. The second through hole 152 is located closer to the negative electrode attachment hole 142 than the positive electrode attachment hole 132.

In this embodiment, only the first through hole 151 is used for injection of the electrolyte. The second through hole 152 that is not used for injecting the electrolytic is previously closed by the sealing member 162. The sealing member 162 includes a first sealing portion 162a and a second sealing portion 162b. The first sealing part 162a seals space between the negative electrode attachment hole 142 and the negative terminal 145. The second sealing portion 162b seals the second through hole 152. The configuration of the negative electrode attachment hole 142, the second through hole 152, and the sealing member 162 can be made similar to the configuration of the negative electrode attachment hole 42, the second through hole 41, and the second sealing member 62 described above (see FIG. 7), and thus, will not be described in detail.

After the injection of the electrolyte through the through hole 151 is completed, the through hole 151 is sealed by the sealing member 163. The configuration of the positive electrode attachment hole 132, the first through hole 151, and the sealing members 161 and 163 can be made similar to the configuration of the positive electrode attachment hole 32, the first through hole 31, the first sealing member 61, and the third sealing member 63 described above (see FIG. 6), and thus, will not be described in detail.

With this configuration, in both the case of injection from one of the through holes 151 and 152 and the case of injection from the two through holes, the same sealing plate 150 can be used. The configuration of the sealing plate 150 does not need to be changed in accordance with conditions during the injection. Furthermore, the through holes 151 and 152 can be sealed as necessary before the injection simply by changing the configuration of the sealing member. Thus, the sealing plate 150 has high versatility. The power storage device 100B with the sealing plate 150 described above can have a high degree of freedom in injecting the electrolyte and enhanced productivity, for example.

Various examples of the technique disclosed here have been described above. Unless otherwise specified, the embodiment and other examples mentioned herein do not limit the present disclosure. The technique disclosed here can be modified in various ways, and the constituent elements and the processes described here can be appropriately omitted or appropriately combined unless no particular problems arise. The specification includes the disclosures described in the following items.

Item 1: A power storage device including: a case body whose two opposed surfaces are open; an electrode body housed in the case body; an electrolyte housed in the case body; a positive electrode terminal connected to the electrode body; a negative electrode terminal connected to the electrode body; a positive electrode sealing plate having a positive electrode attachment hole to which the positive electrode terminal is attached, the positive electrode sealing plate closing one of the two opposed surfaces; and a negative electrode sealing plate having a negative electrode attachment hole to which the negative electrode terminal is attached, the negative electrode sealing plate closing another of the two opposed surfaces, wherein the positive electrode sealing plate has a first through hole through which the electrolyte is allowed to be injected, and the negative electrode sealing plate has a second through hole through which the electrolyte is allowed be injected.

Item 2: The power storage device according to Item 1, wherein the first through hole and the second through hole are located at rotationally symmetric positions with respect to a center axis of the case body, and the center axis is parallel to the positive electrode sealing plate and the negative electrode sealing plate.

Item 3: The power storage device according to Item 1 or 2, wherein the positive electrode sealing plate and the negative electrode sealing plate have a common shape.

Item 4: The power storage device according to any one of Items 1 to 3, further including: a first sealing member that seals space between the positive electrode attachment hole and the positive electrode terminal; a second sealing member that seals space between the negative electrode attachment hole and the negative electrode terminal; and a third sealing member that seals one of the first through hole and the second through hole, wherein one of the first sealing member and the second sealing member located on the sealing plate having another of the first through hole and the second through hole, seals the another through hole.

Item 5: The power storage device according to Item 4, wherein the first sealing member is shaped by integral resin molding with the positive electrode sealing plate and the positive electrode terminal, and the second sealing member is shaped by integral resin molding with the negative electrode sealing plate and the negative electrode terminal.

## Claims

1. A power storage device (100) comprising:
a case body (12) whose two opposed surfaces are open;
an electrode body (20) housed in the case body (12);
an electrolyte (50) housed in the case body (12);
a positive electrode terminal (35) connected to the electrode body (20);
a negative electrode terminal (45) connected to the electrode body (20);
a positive electrode sealing plate (30) having a positive electrode attachment hole (32) to which the positive electrode terminal (35) is attached, the positive electrode sealing plate (30) closing one of the two opposed surfaces; and
a negative electrode sealing plate (40) having a negative electrode attachment hole (42) to which the negative electrode terminal (45) is attached, the negative electrode sealing plate (40) closing another of the two opposed surfaces, wherein
the positive electrode sealing plate (30) has a first through hole (31) through which the electrolyte (50) is allowed to be injected, and
the negative electrode sealing plate (40) has a second through hole (41) through which the electrolyte (50) is allowed be injected.

2. The power storage device (100) according to claim 1, wherein the first through hole (31) and the second through hole (41) are located at rotationally symmetric positions with respect to a center axis of the case body (12), and the center axis (A) is parallel to the positive electrode sealing plate (30) and the negative electrode sealing plate (40).

3. The power storage device (100) according to claim 1 or 2, wherein the positive electrode sealing plate (30) and the negative electrode sealing plate (40) have a common shape.

4. The power storage device (100) according to claim 1 or 2, further comprising:
a first sealing member (61) that seals space between the positive electrode attachment hole (32) and the positive electrode terminal (35);
a second sealing member (62) that seals space between the negative electrode attachment hole (42) and the negative electrode terminal (45); and
a third sealing member (62) that seals one of the first through hole (31) and the second through hole (41), wherein
one of the first sealing member (61) and the second sealing member (62) located on the sealing plate having another of the first through hole (31) and the second through hole (41), seals the another through hole.

5. The power storage device (100) according to claim 4, wherein
the first sealing member (61) is shaped by integral resin molding with the positive electrode sealing plate (30) and the positive electrode terminal (35), and
the second sealing member (62) is shaped by integral resin molding with the negative electrode sealing plate (40) and the negative electrode terminal (45).
